(19) Europäisches Patentamt
European Patent Office
Office européen des brevets

(11) Numéro de publication: **0 347 348 A1**

# (12) DEMANDE DE BREVET EUROPEEN

(21) Numéro de dépôt: **89420213.4**

(22) Date de dépôt: **13.06.89**

(51) Int. Cl.⁴: **C 08 G 69/26**
C 08 L 77/06, C 08 J 5/00

(30) Priorité: **15.06.88 FR 8808261**

(43) Date de publication de la demande:
**20.12.89 Bulletin 89/51**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Barthelemy, Pascal**
**21, rue de la Part-Dieu**
**F-69003 Lyon (FR)**

(74) Mandataire: **Trolliet, Maurice et al**
**RHONE-POULENC CHIMIE Service Brevets Chimie**
**Centre de Recherches des Carrières B.P. 62**
**F-69192 Saint-Fons Cédex (FR)**

Revendication modifiée conformément à la règle 86 (2) CBE pour l'Etat contractant suivant: ES

## (54) Polyamides semi-aromatiques cristallisés ayant une température de fusion inférieure à 290 C.

(57) La présente invention concerne des copolyamides semi-aromatiques cristallisés présentant notamment une température de transition vitreuse Tg supérieure à 142° C, et donc une excellente stabilité du polymère aux températures élevées, ainsi qu'une température de fusion Tf inférieure à 290° C.

Ils présentent une structure comprenant les unités de récurrence (I), (II), éventuellement (II') et (III) : (I) désignant :

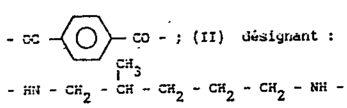

; (II) désignant :

; (II') désignant :

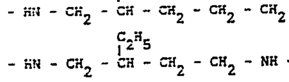

; et (III) désignant :

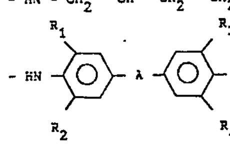

avec $R_1$, $R_2$, $R_3$ et $R_4$ représentant des groupes alkyles ayant de 1 à 3 atomes de carbone et A représentant

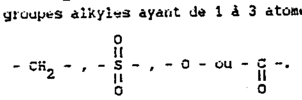

Ces copolyamides, qui sont aisément transformables par voie fondue, permettent d'obtenir des objets moulés, fils ou films pour lesquels on note une excellente conservation des propriétés mécaniques en fonction de la température.

EP 0 347 348 A1

## Description

## POLYAMIDES SEMI-AROMATIQUES CRISTALLISES AYANT UNE TEMPERATURE DE FUSION INFERIEURE A 290°C

La présente invention concerne des polyamides cristallisés dérivant d'acide téréphtalique, de méthyl-2 pentaméthylènediamine et d'une diamine aromatique encombrée.

On connaît déjà depuis longtemps des polyamides dérivant de diamines aliphatiques et de diacides carboxyliques aliphatiques ou aromatiques. Selon leur composition, ces polyamides sont des substances cristallisées (on parle alors plus généralement dans ce cas de polymères semi-cristallins) ayant des températures de fusion (Tf) élevées ou des substances complètement amorphes ayant des températures de transition vitreuse (Tg) relativement basses.

On utilise avantageusement les polyamides semi-cristallins lorsque l'on souhaite fabriquer des articles conformés qui présentent une bonne résistance thermo-mécanique à température élevée. Le plus connu des polyamides semi-cristallins est le polyamide 6.6 (polymère d'hexaméthylènediamine et d'acide adipique) ; ayant une Tf de l'ordre de 265°C, ce polyamide est aisément transformable par voie fondue, mais, en raison d'une Tg basse d'environ 50°C, il trouve des domaines d'application qui sont limités à ceux faisant intervenir des températures d'utilisation qui restent inférieures à 100°C. D'autres polyamides semi-cristallins sont apparus qui présentent une Tg plus élevée et, par voie de conséquence, une meilleure conservation des valeurs des propriétés mécaniques en fonction de la température. Des polyamides typiques de cette nature sont par exemple ceux obtenus à partir d'acide téréphtalique, d'acide isophtalique (20 à 40 % en mole dans le mélange des diacides) et d'hexaméthylènediamine (cf. notamment US-A-3.941.755 et US-A-4.607.073) qui présentent une Tg comprise entre environ 120° et 140°C ; on relève donc bien la stabilité thermique, mais la transformation de ces copolyamides demande des températures de mise en oeuvre très élevées en raison des hautes températures de fusion obtenues qui se situent entre environ 320° et 340°C. La possibilité d'obtenir des Tg supérieures à 100°C tout en ayant des valeurs de Tf qui restent préférentiellement inférieures à 290°C de manière à ce que le polymère puisse être mis en oeuvre selon les méthodes habituelles utilisées pour la transformation du polyamide 6.6, existe et elle peut être trouvée au niveau du polyamide obtenu à partir d'acide téréphtalique et de méthyl-2 pentaméthylènediamine-1,5 (cf. JA-A-69/019.551) dont la Tg est égale à 142°C tandis que la Tf est égale à 285°C.

La Tg étant un élément important qui va déterminer la stabilité thermique des polymères, il reste souhaitable de pouvoir obtenir des polyamides à Tg supérieure à 142°C ayant une Tf qui demeure inférieure à 290°C ; la solution technique proposée ci-après par l'invention de la Demanderesse correspond justement à la satisfaction de cet objectif.

Plus précisément, la présente invention concerne des copolyamides semi-cristallins réalisées à partir de réactifs comprenant de l'acide téréphtalique ou un dérivé et de la méthyl-2 pentaméthylènediamine, ces copolyamides étant caractérisés par les points suivants :

. ils contiennent dans leur structure les unités de récurrence de formules (I), (II), éventuellement (II'), et (III) :

(I) désignant la structure : 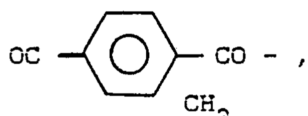 ,

(II) désignant la structure : $-HN-CH_2-CH(CH_3)-CH_2-CH_2-CH_2-NH-$ ,

(II') désignant la structure : $-HN-CH_2-CH(C_2H_5)-CH_2-CH_2-NH-$ ,

(III) désignant la structure : 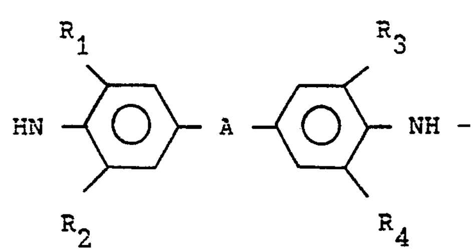

dans laquelle :

- les symboles $R_1$, $R_2$, $R_3$ et $R_4$, identiques ou différents, représentent chacun un radical méthyle, éthyle,

propyle ou isopropyle, et obéissent aux conditions suivantes : soit $R_1 = R_2 = R_3 = R_4$, soit $R_1 = R_2$ avec $R_3 = R_4$, soit $R_1 = R_3$ avec $R_2 = R_4$ ou soit $R_1 = R_4$ avec $R_2 = R_3$,
- le symbole A représente un groupement :

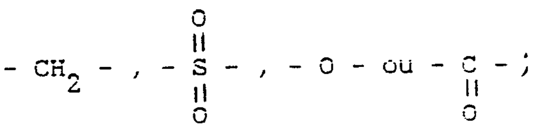

. le rapport molaire des unités (I) par rapport à la somme des unités (II) + (II′) + (III) est égal à 1 ;
. la quantité des unités (II′) dans le mélange (II) + (II′) se situe dans l'intervalle allant de 0 à 5 % en mole et celle des unités (II), par rapport à la même référence, se situe dans l'intervalle allant de 100 à 95 % en mole ;
. la quantité des unités (III) dans le mélange (II) + (II′) + (III) obéit aux conditions complémentaires suivantes :
- elle est inférieure à 8 % en mole lorsque les quatre symboles $R_1$, $R_2$, $R_3$ et $R_4$ représentent chacun un radical ayant plus d'un atome de carbone,
- elle est inférieure à 13 % en mole lorsque seulement deux des quatre symboles $R_1$, $R_2$, $R_3$ et $R_4$ représentent chacun un radical ayant plus d'un atome de carbone (les deux autres symboles représentant alors chacun un radical méthyle), ou
- elle est inférieure à 18 % en mole lorsque les quatre symboles $R_1$, $R_2$, $R_3$ et $R_4$ représentent chacun un radical méthyle.

Lorsque la quantité des unités (III) devient égale ou supérieure à l'une ou l'autre des bornes indiquées ci-avant, les copolyamides obtenus sont totalement amorphes.

Les unités de formule (I) proviennent d'acide téréphtalique ou d'un dérivé comme par exemple un dihalogénure ou un diester.

Les unités de formule (II) sont issues de méthyl-2 pentaméthylènediamine-1,5. Quand aux unités éventuelles de formule (II′), elles dérivent d'éthyl-2 tétraméthylènediamine-1,4. On peut effectuer la synthèse de la méthyl-2 pentaméthylènediamine utilisée par hydrogénation du dinitrile de l'acide méthyl-2 glutarique selon des procédés connus. De même, la synthèse de l'éthyl-2 tetraméthylènediamine peut être effectuée par hydrogénation du dinitrile de l'acide éthyl-2 succinique.

S'agissant des unités de formule (III), elles proviennent des diamines de formule générale :

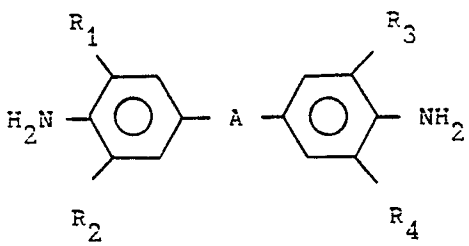

(IV)

dans laquelle les symboles $R_1$, $R_2$, $R_3$ et $R_4$ et A présentent les significations données ci-avant à propos dans unités de formule (III).

Selon une modalité préférentielle, les copolyamides de la présente invention présentent une structure telle que définie ci-avant dans laquelle :
. les unités (III) possèdent la structure précédemment mentionnée avec A = $-CH_2-$, et
. la quantité des unités (III) dans le mélange (II) + (II′) + (III) obéit aux conditions complémentaires suivantes :
- elle se situe dans l'intervalle allant de 2 à 7 % en mole lorsque les quatre symboles $R_1$, $R_2$, $R_3$ et $R_4$ représentent chacun un radical ayant plus d'un atome de carbone,
- elle se situe dans l'intervalle allant de 2 à 12 % en mole lorsque seulement deux des quatre symboles $R_1$, $R_2$, $R_3$ et $R_4$ représentent chacun un radical ayant plus d'un atome de carbone, ou
- elle se situe dans l'intervalle allant de 2 à 17 % en mole lorsque les quatre symboles $R_1$, $R_2$, $R_3$ et $R_4$ représentent chacun un radical méthyle.

A titre d'exemples spécifiques de diamines encombrées de formule (IV) qui conduisent aux unités de formule (III), dans laquelle A = $-CH_2-$, on peut citer en particulier :
- le diamino-4,4′ tétraméthyl-3,3′,5,5′ diphénylméthane,
- le diamino-4,4′ tétraéthyl-3,3′,5,5′ diphénylméthane,
- le diamino-4,4′ diméthyl-3,5 diéthyl-3′,5′ diphénylméthane,
- le diamino-4,4′ diéthyl-3,3′ diméthyl-5,5′ diphénylméthane,
- le diamino-4,4′ tétraisopropyl-3,3′,5,5′ diphénylméthane,
- le diamino-4,4′ diisopropyl-3,3′ diméthyl-5,5′ diphénylméthane.

Ces diamines encombrées peuvent être préparées selon les procédés décrits dans le brevet anglais GB-A-852.651 et le brevet américain US-A-3.481.900.

Parmi les copolyamides appartenant au groupe préféré défini ci-avant, ceux qui conviennent tout particulièrement bien sont les polymères présentant une structure dans laquelle les unités de formule (III) proviennent des diamines encombrées suivantes : le diamino-4,4′ diéthyl-3,3′ diméthyl-5,5′ diphénylméthane,

le diamino-4,4′ tétraéthyl-3,3′,5,5′ diphénylméthane et le diamino-4,4′ tétraisopropyl-3,3′,5,5′ diphénylméthane.

On prépare facilement les copolyamides comportant les unités de récurrence de formules (I), (II), éventuellement (II′), et (III) par des procédés de polycondensation bien connus des experts dans le domaine des polymères.

Par exemple un mode opératoire commode consiste dans le procédé de polycondensation en masse fondue. On introduit les diamines et le diacide carboxylique, le cas échéant, en ajoutant de l'eau, dans un autoclave en acier inoxydable. Il est quelquefois avantageux de préparer les sels des diamines et du diacide carboxylique auparavant. On chauffe les réactifs à une température allant de 200 à 250° C environ, tout en agitant. On évacue la vapeur d'eau et on augmente la température à environ 260 à 300° C. A cette température, on agite le mélange réactionnel quelque temps dans le courant d'azote. Enfin on fait le vide dans l'autoclave et on continue à condenser jusqu'au moment où le polyamide a atteint le poids moléculaire désiré. On peut également faire réagir un ester alkylique inférieur, comme par exemple un ester méthylique, du diacide carboxylique avec le mélange des diamines. Ce procédé peut consister à enchaîner dans un même réacteur les deux étapes suivantes : la première étape est une prépolymérisation à pression atmosphérique à une température de l'ordre de 90 à 130° C avec élimination de l'alcool formé ; dans la deuxième étape on monte la température vers 250 à 300° C avec distillation de l'alcool pour achever la polycondensation.

Un autre procédé commode est la technique de polycondensation en solution selon laquelle on fait réagir l'halogénure du diacide carboxylique, comme par exemple le chlorure du diacide (chlorure de téréphtaloyle), avec le mélange des diamines en opérant dans un solvant exempt de traces d'eau. Les solvants couramment utilisés sont des bons solvants ou des agents gonflants des polymères à synthétiser. Ils sont en général de nature apotique polaire. Il est également nécessaire pour une plus grande efficacité de la polycondensation de dissoudre dans le milieu réactionnel une base organique susceptible de réagir avec l'hydracide dégagé lors de la réaction d'acylation ; cette base est très souvent une amine tertiaire, comme par exemple la triéthylamine, la diisopropylbutylamine ou la pyridine. On a coutume de maintenir au cours de la polycondensation une température de la masse réactionnelle constante et relativement basse telle que celle comprise 0° C et 10° C. Une fois l'addition des réactifs terminée, on revient à température ambiante. Le polymère peut alors être isolé par précipitation dans un non solvant.

Un autre procédé commode encore pour fabriquer les copolyamides selon l'invention consiste à réaliser une polycondensation interfaciale. Celle-ci s'effectue à l'interface entre une phase aqueuse contenant les amines et un solvant organique non miscible à l'eau contenant l'halogénure du diacide carboxylique (par exemple : dichlorométhane, tetrachloroéthylène). On a coutume de dissoudre une base inorganique dans la phase aqueuse, permettant de capter l'hydracide dégagé lors de la réaction d'acylation. Les températures de réaction sont en général maintenues entre 0° C et 10° C, ceci afin de limiter la formation des oligomères de bas poids moléculaire.

Dans l'un ou l'autre des procédés précités, les réactifs sont utilisés dans des proportions telles que :

. le rapport molaire acide téréphtalique ou son dérivé diamine est égal à 1,

. la quantité d'éthyl-2 tétraméthylènediamine-1,4 dans le mélange éthyl-2 tétraméthylènediamine-1,4 + méthyl-2 pentaméthylènediamine-1,5 se situe dans l'intervalle allant de 0 à 5 % en mole,

. la quantité de diamine aromatique encombrée de formule (IV) dans le mélange des diamines obéit aux conditions suivantes :

- elle est inférieure à 8 % en mole, et de préférence elle se situe dans l'intervalle allant de 2 à 7 % en mole, lorsque les quatre symboles $R_1$, $R_2$, $R_3$ et $R_4$ représentent chacun un radical ayant plus d'un atome de carbone,
- elle est inférieure à 13 % en mole, et de préférence elle se situe dans l'intervalle allant de 2 à 12 % en mole, lorsque seulement deux des quatre symboles $R_1$, $R_2$, $R_3$ et $R_4$ représentent chacun un radical ayant plus d'un atome de carbone (les deux autres sympoles représentant alors chacun un radical méthyle), ou
- elle est inférieure à 18 % en mole, et de préférence elle se situe dans l'intervalle allant de 2 à 17 % en mole, lorsque les quatre symboles $R_1$, $R_2$, $R_3$ et $R_4$ représentent chacun un radical méthyle.

Par rapport aux polyamides semi-cristallins conformes aux indications de la demande japonaise JA-A-69/019.551, les copolyamides selon la présente invention se signalent notamment par une température de transition vitreuse Tg plus élevée qui se situe, selon la structure et la quantité des unités de formule (III), entre 143° et 160° C et par une température de fusion Tf plus basse que 285° C. Par voie de conséquence, les copolyamides obtenus, du fait de leur Tg améliorée, offrent une meilleure stabilité et une meilleure conservation des propriétés mécaniques aux températures élevées ; de plus, du fait de leur Tf abaissée à des températures inférieures à 285° C, ils peuvent être aisément transformés selon les méthodes habituelles utilisées dans le cas du polyamide 6.6.

Les copolyamides selon l'invention peuvent servir de poudre à mouler et être transformés à l'aide des machines conventionnelles d'injection, d'extrusion ou de filage pour donner des objets conformés tels que des pièces, des films, des pellicules ou des fils.

On peut ajouter dans les copolyamides de l'invention, avant, pendant ou vers la fin de la polycondensation, les additifs habituels lors de la préparation de polyamides. Ces additifs sont par exemple des anti-oxydants, des agents ignifugeants, des stabilisants à la lumière, des stabilisants thermiques, des modificateurs de choc, des plastifiants, des agents de démoulage, des azurants optiques, des colorants, etc. On peut également utiliser des charges de renforcement, tels que des fibres organiques ou minérales, des pigments, des poudres minérales, etc.

Ces additifs peuvent être mélangés aux copolyamides ou encore y être incorporés par une nouvelle fusion dans des dispositifs appropriés, par exemple dans une extrudeuse.

Les copolyamides conformes à l'invention peuvent également être alliés ou mélangés avec d'autres homo- ou copolyamides ou mélanges de ceux-ci ou avec d'autres matières plastiques, ce qui peut s'effectuer par exemple en mélangeant les granulés ou les matières plastiques constitutives et en effectuant une coextrusion.

Comme homopolyamide supplémentaire, on peut par exemple envisager le nylon 12 (polymère d'acide ω-amino dodécanoïque), le nylon 11 (polymère d'acide ω-amino undécanoïque), le nylon 6.9 (polymère d'hexaméthylènediamine et d'acide azélaïque), le nylon 6.10 (polymère d'hexaméthylènediamine et d'acide sébacique), le nylon 6 (polymère d'ε-caprolactame) ou le nylon 6.6 (polymère d'hexaméthylènediamine et d'acide adipique), et comme copolyamide, par exemple ceux qui contiennent les monomères conduisant aux homopolyamides indiqués ci-avant ou d'autres copolyamides.

Les exemples non limitatifs qui suivent montrent comment la présente invention peut être mise en oeuvre pratiquement.

EXEMPLE 1

Copolyamide de l'invention obtenu à partir du chlorure de téréphtaloyle, de méthyl-2 pentaméthylènediamine-1,5 et de diamino-4,4′ tétraéthyl-3,3′,5,5′ diphénylméthane [la quantité des unités (III) dans le mélange des diamines est de 5 % en mole].

1. Synthèse du copolyamide :

Dans un réacteur tricol en verre pyrex (marque déposée) de 250 $cm^3$, muni d'un agitateur central à encre et d'une ampoule de coulée, on introduit à température ambiante (20° C) sous une atmosphère d'azote sec :

- 5,51 g (0,0475 mole) de méthyl-2 pentaméthylènediamine,
- 10,11 g de triéthylamine,
- 0,775 g (0,0025 mole) de diamino-4,4′ tétraéthyl-3,3′,5,5′ diphénylméthane, et
- 43,60 g de N-méthylpyrrolidone-2 préalablement séchée pendant 5 heures sur un tamis moléculaire de 4 Å disponible dans le commerce sous la marque déposée PROLABO.

Dans l'ampoule de coulée on introduit sous atmosphère d'azote sec une solution de 10,15 g (0,0500 mole) de chlorure de téréphtaloyle (recristallisé dans la cyclohexanone) dans 43,60 g de N-méthylpyrrolidone-2 préalablement séchée comme indiqué ci-avant.

Le réacteur est alors refroidi à l'aide d'eau glacée de manière à amener la température de la masse réactionnelle à une température de l'ordre de 8° C. On introduit ensuite, sous atmosphère d'azote sec, sous agitation rapide et goutte à goutte, le contenu de l'ampoule de coulée dans le réacteur sur une période de 45 minutes, la température de la masse réactionnelle étant maintenue vers 8° C. En fin d'addition du chlorure de téréphtaloyle, on obtient une solution renfermant environ 12 % en poids de polymère. On laisse revenir à la température ambiante, puis on continue à agiter la masse réactionnelle à cette température pendant 10 heures.

Le copolyamide obtenu est précipité en versant la masse réactionnelle dans 1,5 litre d'eau. On filtre et on lave ensuite 3 fois de suite le polymère avec chaque fois 1 litre d'eau, jusqu'a ce que l'eau de lavage, en définitive, ne contienne plus d'ions chlorures (détectés à l'aide de $AgNO_3$). On essore le polymère sous vide, puis on le sèche dans une étuve à 80° C sous un vide correspondant à $1,33.10^2$ Pa jusqu'à l'obtention d'un poids constant de 10,6 g. Le rendement de cette synthèse est de 93 % (ce rendement est exprimé en poids par rapport au poids théorique du polymère attendu).

2. Caractérisation du copolyamide :

Le copolyamide obtenu est semi-cristallin.

Sa masse moléculaire moyenne en poids ($\overline{Mw}$), déterminée par chromatrographie de perméation de gel avec étalonnage à l'aide de polystyrène, est de 30000 g.

La température de transition vitreuse Tg, déterminée par analyse thermique différentielle (ATD) avec une vitesse de montée en température de 10°C/min opérée sous atmosphère d'azote, est de 144° C.La température de fusion Tf, déterminée par la même méthode, est trouvée égale à 268° C.

L'analyse par RMN du proton (solvant : $CF_3$ COOD ; référence interne : tetraméthylsilane) est en accord avec la structure de polymère statistique présentant les séquences suivantes :

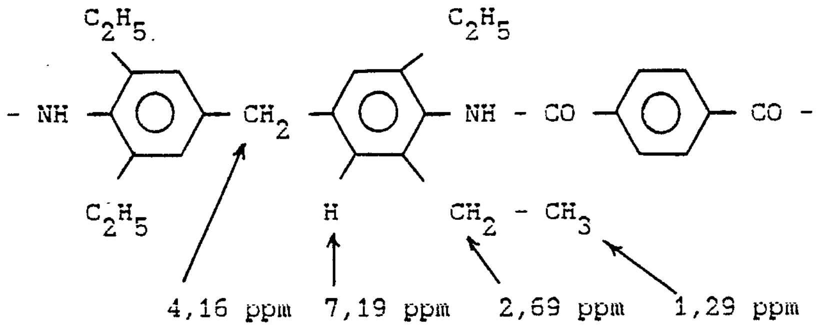

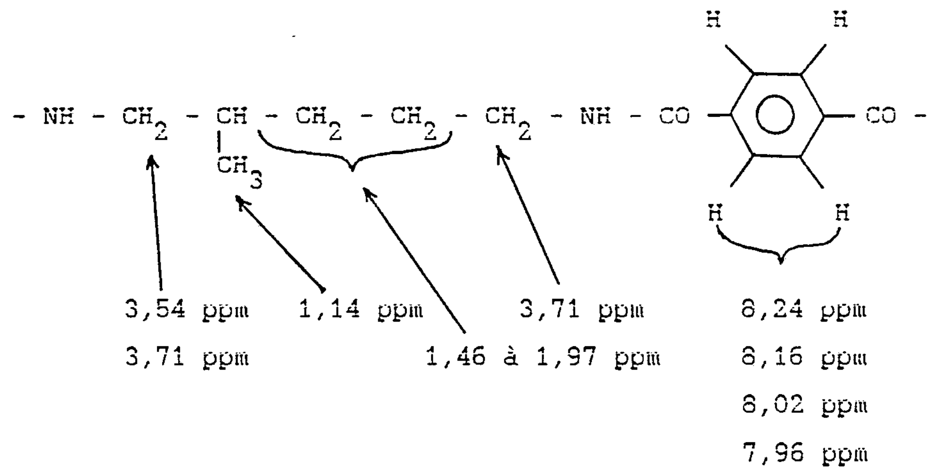


EXEMPLE 2 ET ESSAI COMPARATIF A

Copolyamides dans lesquels les unités (III) dérivent du diamino-4,4′ diéthyl-3,3′ diméthyl-5,5′ diphénylméthane, la quantité de ces unités dans le mélange des diamines étant égale à 10 % en mole.

On a reproduit les mêmes opérations que celle décrites ci-avant à l'exemple 1, mais en utilisant cette fois les nouvelles charges suivantes et un autre solvant (la diméthyl-1,3 imidazolidone-2 à la place de N-méthylpyrrolidone-2) également séché au préalable sur tamis moléculaire :

. dans le réacteur en verre :

| Réactifs/Solvant | | |
|---|---|---|
| - méthylpentaméthylènediamine | : | 10,59 g (0,0913 mole) |
| - triéthylamine | : | 20,94 g |
| - diamine aromatique encombrée avec groupes méthyle et éthyle | : | 2,88 g (0,0102 mole) |
| - diméthylimidazolidone | : | 29 g |

. dans l'ampoule de coulée :

| Réactif/Solvant | | |
|---|---|---|
| - chlorure de téréphtaloyle | : | 20,60 g (0,1015 mole) |
| -diméthylimidazolidone | : | 112,50 g |

Le contenu de l'ampoule de coulée est versé en 2 heures 30 minutes. Après précipitation du polymère dans 2 litres d'eau, son lavage est effectué avec deux fois 2 litres d'eau.

A titre d'essai comparatif, on a examiné le comportement d'un polyamide semi-cristallin conforme aux indications de la demande japonaise JA-A-69/019.551. Ce polyamide est préparé à partir d'acide téréphtalique et de méthyl-2 pentaméthylènediamine-1,5 de la manière suivante :

Dans un ballon de 1 litre en verre, on charge sous azote :
- 124,57 g (0,7504 mole) d'acide téréphtalique,
- 35,75 g d'eau, et
- 299,75 g d'éthanol.

Le mélange est porté à 65° C, puis il est agité pendant 30 minutes à cette température. On coule ensuite en 10 minutes, dans le contenu du ballon, sous agitation, une solution contenant :
- 87,05 g de méthyl-2 pentaméthylènediamine-1,5, et
- 136,60 g d'eau.

Après 30 minutes d'agitation, la masse réactionnelle est limpide. Elle renferme le sel d'acide téréphtalique et de méthylpentaméthylènediamine qui cristallise à température ambiante de 20° C. Le sel est ensuite filtré, puis lavé 3 fois de suite avec chaque fois 150 g de méthanol et enfin séché dans une étuve à 45° C sous un vide correspondant à $66{,}5.10^2$ Pa jusqu'à l'obtention d'un poids constant.

On réalise ensuite la prépolymérisation du sel obtenu en opérant dans un tube de Carius pouvant supporter une pression autogène de $18.10^5$ Pa. Dans cette optique, on introduit dans le tube de Carius 15 g de sel, 85 g

d'eau et 0,0075 g d'acide hypophosphoreux. Le tube est scellé, puis il est placé dans un four porté à 210°C pendant 2 heures.

Au bout de ce temps, le tube est ouvert et la masse réactionnelle est versée dans un réacteur en verre de 125 $cm^3$ dans lequel il est possible de faire le vide. Ce réacteur est placé dans un four dont la montée en température pour achever la polycondensation suit le cycle suivant :

- montée à 290°C en 184 minutes,
- palier à 290°C sous azote pendant 60 minutes,
- palier à 290°C sous un vide correspondant à $66,5.10^2$ Pa pendant 104 minutes.

Le tableau qui suit rassemble les principaux résultats de ces exemple et essai.

| Exemple/Essai | Rendement de la synthèse | Nature du copolyamide | Tg | Tf |
|---|---|---|---|---|
| 2 | 90 % | semi-cristallin | 156°C | 260°C |
| A | non déterminé | semi-cristallin | 142°C | 285°C |

## Revendications

1/ Copolyamides semi-aromatiques cristallisés présentant notamment une température de transition vitreuse Tg supérieure à 142°C et une température de fusion Tf inférieure à 290°C qui sont réalisés à partir de réactifs comprenant de l'acide téréphtalique ou un dérivé et de la méthyl-2 pentaméthylènediamine-1,5, ces copolyamides étant caractérisés par les points suivants :. ils contiennent dans leur structure les unités de récurrence de formules (I), (II), éventuellement (II'), et (III) :

(I) désignant la structure :

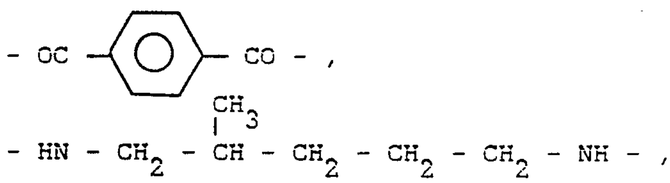

(II) désignant la structure :

(II') désignant la structure :

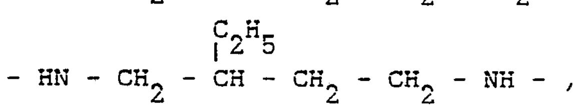

(III) désignant la structure :

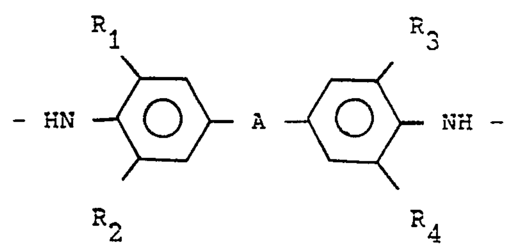

dans laquelle :

-les symboles $R_1$, $R_2$, $R_3$ et $R_4$, identiques ou différents, représentent chacun un radical méthyle, éthyle, propyle ou isopropyle, et obéissent aux conditions suivantes : soit $R_1 = R_2 = R_3 = R_4$, soit $R_1 = R_2$ avec $R_3 = R_4$, soit $R_1 = R_3$ avec $R_2 = R_4$ ou soit $R_1 = R_4$ avec $R_2 = R_3$,

- le symbole A représente un groupement :

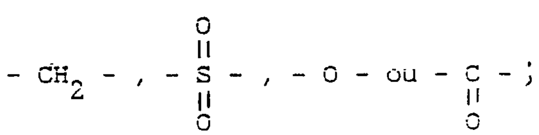

. le rapport molaire des unités (I) par rapport à la somme des unités (II) + (II') + (III) est égal à 1 ;

. la quantité des unités (II') dans le mélange (II) + (II') se situe dans l'intervalle allant de 0 a 5 % en mole et celle des unités (II), par rapport à la même référence, se situe dans l'intervalle allant de 100 à 95 % en mole ;

. la quantité des unités (III) dans le mélange (II) + (II') + (III) obéit aux conditions complémentaires suivantes :

- elle est inférieure à 8 % en mole lorsque les quatre symboles $R_1$, $R_2$, $R_3$ et $R_4$ représentent chacun un radical ayant plus d'un atome de carbone,

- elle est inférieure à 13 % en mole lorsque seulement deux des quatre symboles $R_1$, $R_2$, $R_3$ et $R_4$ représentent chacun un radical ayant plus d'un atome de carbone (les deux autres symboles représentant alors chacun un radical méthyle), ou

- elle est inférieure à 18 % en mole lorsque les quatre symboles $R_1$, $R_2$, $R_3$ et $R_4$ représentent chacun un radical méthyle.

2/ Copolyamides selon la revendication 1, caractérisés en ce qu'ils présentent une structure dans laquelle :

. les unités (III) possèdent la structure précédemment mentionnée avec A = $-CH_2-$, et

. la quantité des unités (III) dans le mélange (II) + (II') + (III) obéit aux conditions complémentaires suivantes :

- elle se situe dans l'intervalle allant de 2 à 7 % en mole lorsque les quatre symboles $R_1$, $R_2$, $R_3$ et $R_4$ représentent chacun un radical ayant plus d'un atome de carbone,

- elle se situe dans l'intervalle allant de 2 à 12 % en mole lorsque seulement deux des quatre symboles $R_1$, $R_2$, $R_3$ et $R_4$ représentent chacun un radical ayant plus d'un atome de carbone, ou

- elle se situe dans l'intervalle allant de 2 à 17 % en mole lorsque les quatre symboles $R_1$, $R_2$, $R_3$ et $R_4$ représentent chacun un radical méthyle.

3/ Copolyamides selon la revendication 2, caractérisés en ce qu'ils présentent une structure dans laquelle les unités de formule (III) proviennent des diamines encombrées suivantes : le diamino-4,4' diéthyl-3,3' diméthyl-5,5' diphénylméthane, le diamino-4,4' tétraéthyl-3,3',5,5' diphénylméthane et le diamino-4,4' tétraisopropyl-3,3',5,5' diphénylméthane.

4/ Mélanges ou alliages des copolyamides selon l'une quelconque des revendications 1 à 3 avec d'autres polyamides consistant dans le nylon 12, le nylon 11, le nylon 6.9, le nylon 6.10, le nylon 6.6, le nylon 6 ou dans les copolyamides obtenus à partir des monomères conduisant aux homopolyamides de type nylon indiqués ci-avant.

5/ Articles conformés tels que objets moulés, corps creux, fils et films issus des copolyamides selon l'une quelconque des revendications 1 à 3 ou de leurs mélanges ou alliages selon la revendication 4.

**Revendications pour l'Etat contractant suivant: ES**

1/ Procédé de préparation de copolyamides semi-aromatiques cristallisés présentant notamment une température de transition vitreuse Tg supérieure à 142°C et une température de fusion Tf inférieure à 290°C qui sont réalisés à partir de réactifs comprenant de l'acide téréphtalique ou un dérivé et de la méthyl-2 pentaméthylènediamine-1,5, caractérisé par le fait que l'on fait réagir :

* l'acide téréphtalique ou un dérivé, avec

* la méthyl-2 pentaméthylènediamine-1,5, prise seule ou en mélange avec l'éthyl-2 tétraméthylènediamine-1,4, et avec

* une diamine aromatique encombrée de formule générale :

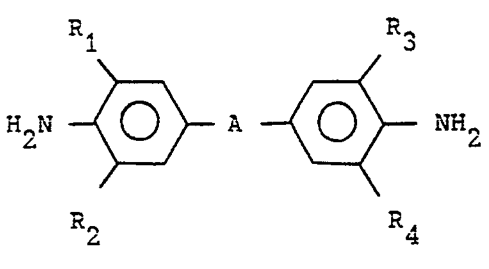

(IV)

dans laquelle :

- les symboles $R_1$, $R_2$, $R_3$ et $R_4$, identiques ou différents, représentent chacun un radical méthyle, éthyle, propyle ou isopropyle, et obéissent aux conditions suivantes : soit $R_1 = R_2 = R_3 = R_4$, soit $R_1 = R_2$ avec $R_3 = R_4$, soit $R_1 = R_3$ avec $R_2 = R_4$ ou soit $R_1 = R_4$ avec $R_2 = R_3$,

- le symbole A représente un groupement :

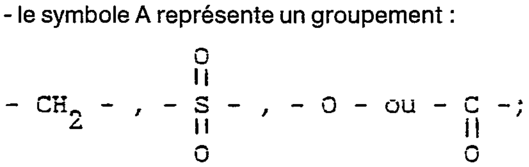

* les réactifs étant utilisés dans des proportions telles que :
. le rapport molaire acide téréphtalique ou son dérivé/diamine est égal à 1,
. la quantité d'éthyl-2 tétraméthylènediamine-1,4 dans le mélange éthyl-2 tétraméthylènediamine-1,4 + méthyl-2 pentaméthylènediamine-1,5 se situe dans l'intervalle allant de 0 à 5 % en mole,
. la quantité de diamine aromatique encombrée de formule (IV) dans le mélange des diamines obéit aux conditions suivantes :
- elle est inférieure à 8 % en mole lorsque les quatre symboles $R_1$, $R_2$, $R_3$ et $R_4$ représentent chacun un radical ayant plus d'un atome de carbone,
- elle est inférieure à 13 % en mole lorsque seulement deux des quatre symboles $R_1$, $R_2$, $R_3$ et $R_4$ représentent chacun un radical ayant plus d'un atome de carbone (les deux autres symboles représentant alors chacun un radical méthyle), ou
- elle est inférieure à 18 % en mole lorsque les quatre symboles $R_1$, $R_2$, $R_3$ et $R_4$ représentent chacun un radical méthyle.

2/ Procédé selon la revendication 1, caractérisé en ce qu'il consiste en la technique de polycondensation en solution selon laquelle on fait réagir le dihalogénure de l'acide téréphtalique avec le mélange des diamines en opérant dans un solvant exempt de traces d'eau.

3/ Procédé selon l'une quelconque des revendications 1 ou 2, caractérisé par les points suivants :
. la diamine aromatique encombrée de formule (IV) possède une structure dans laquelle A = $-CH_2-$,
. la quantité de diamine aromatique encombrée dans le mélange des diamines obéit aux conditions complémentaires suivantes :
- elle se situe dans l'intervalle allant de 2 à 7 % en mole lorsque les quatre symboles $R_1$, $R_2$, $R_3$ et $R_4$ représentent chacun un radical ayant plus d'un atome de carbone,
- elle se situe dans l'intervalle allant de 2 à 12 % en mole lorsque seulement deux des quatre symboles $R_1$, $R_2$, $R_3$ et $R_4$ représentent chacun un radical ayant plus d'un atome de carbone, ou
- elle se situe dans l'intervalle allant de 2 à 17 % en mole lorsque les quatre symboles $R_1$, $R_2$, $R_3$ et $R_4$ représentent chacun un radical méthyle.

4/ Procédé selon la revendication 3, caractérisé en ce que la diamine aromatique encombrée de formule (IV) est choisie dans le groupe formé par : le diamino-4,4′ diéthyl-3,3′ diméthyl-5,5′ diphénylméthane, le diamino-4,4′ tétraéthyl-3,3′,5,5′ diphénylméthane et le diamino-4,4′ tétraisopropyl-3,3′,5,5′ diphénylméthane.

5/ Application des copolyamides préparés selon l'une quelconque des revendications 1 à 4 à la réalisation de mélanges ou alliages avec d'autres polyamides consistant dans le nylon 12, le nylon 11, le nylon 6.9, le nylon 6.10, le nylon 6.6, le nylon 6 ou dans les copolyamides obtenus à partir des monomères conduisant aux homopolyamides de type nylon indiqués ci-avant.

6/ Application des copolyamides préparés selon l'une quelconque des revendications 1 à 4 à la réalisation d'articles conformés tels que objets moulés, corps creux, fils et films.

7/ Application des mélanges ou alliages selon la revendication 5 à la réalisation d'articles conformés tels que objets moulés, corps creux, fils et films.

Office européen des brevets

# RAPPORT DE RECHERCHE EUROPEENNE

Numero de la demande

EP 89 42 0213

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 355 043 (DYNAMIT NOBEL AG)<br>* Revendications * | 1-5 | C 08 G 69/26<br>C 08 L 77/06<br>C 08 J 5/00 |
| A | CHEMICAL ABSTRACTS, vol. 71, 1969, page 75, résumé no. 114079d, Columbus, Ohio, US; & JP-A-69 19 551 (TOYO RAYON CO. LTD) 23-08-1969 | 1-5 | |
| A | US-A-3 382 216 (BLASCHKE et al.)<br>* Revendications 1,2; colonne 1, lignes 43-48 * | 1-5 | |
| A,D | US-A-3 941 755 (CHAPMAN et al.)<br>* Revendications 1-4 * | 1-5 | |
| | | | DOMAINES TECHNIQUES RECHERCHES (Int. Cl.4) |
| | | | C 08 G 69/26 |

Le présent rapport a été établi pour toutes les revendications

| Lieu de la recherche | Date d'achèvement de la recherche | Examinateur |
|---|---|---|
| LA HAYE | 18-09-1989 | GLANDDIER A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)